# EUROPÄISCHE PATENTANMELDUNG

(11) **EP 2 246 500 A2**
(43) Veröffentlichungstag der Anmeldung: **03.11.2010**
(21) Anmeldenummer: 10000475.3
(22) Anmeldetag: 19.01.2010
(51) Int. Cl.: E04F 13/08, E04F 15/02, B27N 3/06, B32B 21/06, B44C 5/04

(54) **Paneel und Verfahren zur Herstellung eines Paneels**

(30) Priorität: 22.04.2009 DE 102009018488
(71) Anmelder: HAMBERGER INDUSTRIEWERKE GmbH, 83071 Rosenheim/Stephanskirchen (DE)
(72) Erfinder: Hamberger, Peter, 83071 Stephanskirchen (DE)
(74) Vertreter: Winter, Brandl, Fürniss, Hübner, Röss, Kaiser, Polte - Partnerschaft

(57) **Zusammenfassung**

Die Erfindung betrifft ein Paneel für einen Wand-, Decken- oder Bodenbelag, mit einem Kern (2), insbesondere aus HDF/MDF, der mit einer Deck- oder Dekorschicht (6) versehen ist, welche einen Anteil an auf Harnstoff basierenden Material enthält. Das Paneel ist mit minimalem vorrichtungstechnischen Aufwand herstellbar und weist eine hohe Oberflächenqualität auf. Die Erfindung betrifft auch ein Verfahren zur Herstellung des Paneels, mit den folgenden Schritten: Herstellen einer auf Harnstoff basierenden Pressmasse; Aufbringen der Pressmasse auf einer Grundschicht (2) und Verpressen des Schichtaufbaus einer Pressform bei erhöhtem Druck und erhöhter Temperatur.

## Beschreibung

Die Erfindung betrifft ein Paneel für einen Wand-, Decken- oder Bodenbelag gemäß dem Oberbegriff des Patentanspruches 1 und ein Verfahren zur Herstellung eines derartigen Paneels.

Im Bereich von Bodenbelägen sind Laminatböden bekannt, bei denen ein HDF/MDF-Kern aus mit Bindemitteln versetzten Holzfasern besteht, der eine Dichte im Bereich von 600 bis 900 kg/m³ aufweist. Dieser Kern wird bei den herkömmlichen Laminatböden an seiner Unterseite, d.h. auflageseitig mit einer Unterzugsschicht (Underlay) und im Bereich der Sicht- oder Nutzfläche mit einer Dekorschicht aus Papier und einer Deckschicht (Overlay) beschichtet. Diese Schichten werden durch Pressen miteinander verbunden. Ein derartiger Laminatfußboden ist beispielsweise unter www.Hamberger.de <http://www.Hamberger.de> beschrieben.

Die DE 10 2004 003 457 A1 zeigt einen Fußbodenbelag, bei dem ein Kern eines Paneels aus einem Holz-Späne- oder Holzfasermaterial besteht, das mit einem Bindemittel versetzt ist und auf eine Dichte von mehr als 1000 kg/m³ verpresst ist. Es zeigte sich, dass bei dieser Lösung relativ hohe Anforderungen an das für den Kern verwendete Material bestehen und darüber hinaus eine Produktion mit geringem Ausschuss ein erhebliches Fertigungs-Know-How erfordert.

Demgebenüber liegt der Erfindung die Aufgabe zugrunde, ein Paneel zu schaffen, das mit minimalem vorrichtungstechinschen Aufwand herstellbar ist und eine hohe Oberflächenqualität aufweist. Aufgabe der Erfindung ist des Weiteren, ein Verfahren zur Herstellung eines derartigen Paneels zu schaffen.

Diese Aufgabe wird hinsichtlich des Paneels durch die Merkmale des Patentanspruches 1 und hinsichtlich des Verfahrens durch die Merkmale des nebengeordneten Patentanspruches 12 gelöst.

Erfindungsgemäß wird die Aufgabe dadurch gelöst, dass eine Deck- oder Dekorschicht eines Paneels aus einem auf Harnstoff basierendem Material hergestellt ist. Derartige Materialien werden beispielsweise bei der Fertigung von WC-Sitzen verwendet und zeichnen sich durch eine vergleichsweise gute Verarbeitbarkeit und eine hochwertige ästhetische Anmutung aus. Bei der Herstellung von flächigen Paneelen, wie beispielsweise Fußbodenelementen ist die erfindungsgemäße Verwendung von auf Harnstoff basierenden Material jedoch ohne Vorbild.

Bei einem besonders bevorzugten Ausführungsbeispiel besteht dieses Material im Wesentlichen aus eingefärbtem/pigmentiertem UREA.

Zusätzlich kann diese Deckschicht mit Materialien versetzt sein, die die Abriebfestigkeit erhöhen, die Schrumpfung verringern oder die Fließfähigkeit verbessern.

Zur Verbesserung der Vernetzung kann die Deckschicht noch einen Anteil an Melamin enthalten - dieser Anteil ist jedoch wesentlich geringer als der UREA-Anteil.

Hinzugegebene Zuschlagsstoffe werden vorzugsweise als Nanopartikel ausgeführt, da diese die ästhetische Anmutung praktisch nicht beeinträchtigen und insbesondere zur Erhöhung der Verschleißfestigkeit geeignet sind.

Um der Anmutung eines Naturproduktes möglichst nahe zu kommen, kann die Deckschicht geprägt sein.

Bei einer Variante der Erfindung ist das Paneel auch mit einer Unterzugsschicht ausgeführt, die beispielsweise ebenfalls aus dem auf Harnstoff basierenden Material hergestellt sein kann.

In Abwendung von dem oben beschriebenen Konzept kann das Paneel auch durchgängig aus dem aus Harnstoff bestehendem Material hergestellt sein.

Beim erfindungsgenäßen Verfahren zur Herstellung eines Paneels wird zunächst eine auf Harnstoff basierende Pressmasse hergestellt, diese Pressmasse dann auf einer Grundschicht (die ebenfalls aus UREA bestehen kann) aufgetragen, und der entsprechende Schichtaufbau in einer Pressform bei geeignetem Druck und geeigneter Temperatur verpresst. Man erhält so ein Produkt, dass sich durch eine hochwertige Anmutung auszeichnet und dabei auch besonders für Anwendungen auf dem Fußbodensektor vorteilhafte Eigenschaften aufweist.

Die Pressmasse kann durch Streichen, Walzen oder durch Aufbringen über eine Düse oder dergleichen in die Pressform eingebracht werden.

Bei einer Variante der Erfindung wird im Presswerkzeug auch eine Unterzugsschicht ausgebildet, die beispielsweise auch aus dem auf Harnstoff basierenden Material bestehen kann. Selbstverständlich können auch herkömmliche Unterzugsmaterialien, wie beispielsweise eine Holzschicht oder aus einer geeignete Unterzugsschicht, wie sie beispielsweise bei Laminatböden verwendet wird.

Sonstige vorteilhafte Weiterbildungen der Erfindung sind Gegenstand weiterer Unteransprüche.

Im Folgenden wird ein bevorzugtes Ausführungsbeispiel der Erfindung anhand eines schematischen Ausführungsbeispiels erläutert.

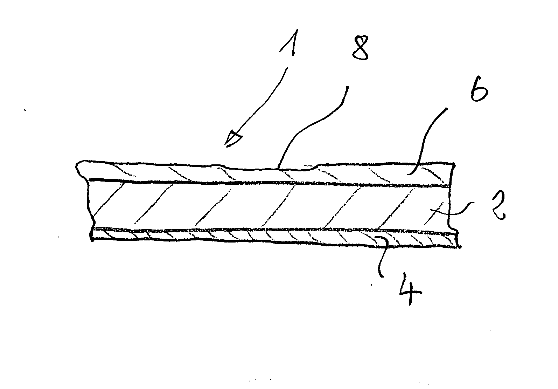

Die einzige Figur zeigt den Schichtaufbau eines Fußbodenpaneels 1, das nach dem erfindungsgemäßen Verfahren hergestellt ist. Dieses Fußbodenpaneel 1 hat einen Kern 2, der beispielsweise aus HDF/MDF hergestellt ist. Es handelt sich dabei um mit Bindemitteln versetzte Holzfasern, die als vorgefertigtes Produkt eine Dichte im Bereich von 600 bis 900 kg/m³ aufweisen. Wie gesagt, kann dieser Kern als vorgefertigtes Plattenelement angeliefert werden. Prinzipiell ist es jedoch auch möglich, den HDF/MDF-Kern in situ während des Pressvorgangs auszubilden.

An der Unterseite des Paneels 1 ist ein Underlay 4 aufgebracht, das beispielsweise den gleichen Aufbau wie ein Underlay eines Laminatfußbodens aufweist, prinzipiell jedoch auch aus dem gleichen Material hergestellt sein kann, wie es für eine die Sichtfläche des Fußbodenpaneels 1 ausbildende Deckschicht 6 verwendet wird. Erfindungsgemäß besteht diese Deckschicht 6 aus einem auf Harnstoff basierendem Material, beispielsweise einer Harnstoff-Formaldehyd-Formmasse. Diese Formmassen zeichnen sich vor allem dadurch aus, dass daraus hergestellte Formteile eine hohe Festigkeit, Oberflächenhärte, Schwerbrennbarkeit und Lichtechtheit aufweisen. Diese Formmasse kann mit Füllstoffen versetzt sein, beispielsweise Cellulose, Zeolithe, Talcum, Christobalit, Kalziumcarbonat, Glasfaer, Kohlefaser, Glimmer, Holzmehl oder deren Mischung. Des Weiteren können Zuschlagstoffe, wie beispielsweise eine antibakterielle Ausrüstung, Inhibitoren, Verstärkungsstoffe, Farbstoffe, Pigmente, Gleitmittel, Antihaftmittel, UV-Stabilisatoren, Mittel zur Verbesserung der Fließfähigkeit, Mittel zur Verbesserung der Abriebfestigkeit, etc. zugegeben werden. Eine derartige Formmasse wird vorzugsweise nach einem Verfahren hergestellt, wie es in der DE 10 2008 039 769 der Anmelderin beschrieben ist. Der Inhalt dieser Patentanmeldung ist zur Offenbarung zur vorliegenden Patentanmeldung zu rechnen, so dass im Hinblick auf die Bestandteile der Formmasse (UREA) auf die entsprechenden Ausführungen in der oben vorgenannten Patentanmeldung verwiesen werden kann.

Die oben genannten Nanopartikel oder Nanoteilchen sind in der Regel künstlich hergestellt und gezielt mit Eigenschaften oder Funktionalitäten ausgestattet, die der jeweiligen Aufgabenstellung angepasst sind. Im vorliegenden Fall können die Nanopartikel im Hinblick auf die Verbesserung der Fließfähigkeit und beim Verteilen in der Pressform und im Hinblick auf die minimale Schrumpfung beim Pressvorgang ausgelegt sein. Kohlenstoffhaltige Nanopartikel können des Weiteren auch zur Verbesserung der Verschleißfestigkeit ausgebildet sein. Die Größe derartiger Nanopartikel liegt üblicher Weise im Bereich von 1 bis 100 Nanometern.

Im Hinblick auf die Eigenschaften derartiger Nanomaterialien wird auf die einschlägige Literatur verwiesen.

Wie bereits erwähnt, wird der in der einzigen Figur dargestellte Schichtaufbau vorzugsweise mittels Pressen bei hohem Druck und vergleichsweise hoher Temperatur verarbeitet.

Der Druck kann dabei im Größenbereich zwischen 100 und 1000 bar liegen, während die Temperatur vorzugsweise im Bereich zwischen 100°C und 300°C liegt. Es können natürlich auch andere Temperaturbereiche gewählt werden. Für das dargestellte Ausführungsbeispiel wird in die Kavität des Presswerkzeugs zunächst die Underlay-Schicht 4 eingebracht. Dieses Einbringen kann beispielsweise durch Streichen, über eine Düse, durch Sprühen oder in sonstiger Weise erfolgen. Auf diese Underlay-Schicht 4 wird dann entweder der HDF/MDF-Vorformling aufgelegt oder aber eine aus Holzfasern bestehende und mit Bindemittel versetzte Schicht aufgebracht. Der Materialaufbau dieser Schicht entspricht in der Regel demjenigen, der bei der Herstellung von HDF/MDF-Platten verwendet wird. Auch diesbezüglich ist hinreichend Stand der Technik vorhanden, so dass auf die entsprechenden Ausführungen verwiesen werden kann. Als abschließende Schicht wird auf diesen Schichtaufbau die Deckschicht 6 aufgetragen, wobei diese ebenfalls wieder durch Aufstreichen, Aufwalzen, Sprühen oder mittels einer Düse aufgetragen werden kann. In dem Fall, in dem die Underlay-Schicht 4 nicht aus dem gleichen Material besteht, kann diese auch als Folienmaterial oder in sonstiger Weise als Vorformling eingebracht werden. Prinzipiell ist es auch vorstellbar, dass der HDF/MDF-Kern 2 bereits mit der Underlay-Schicht 4 versehen ist und dann in das Presswerkzeug eingelegt wird. Die Deckschicht 6 ist in geeigneter Weise über Farbpigmente mit der vorgegebenen Farbe eingefärbt, beispielsweise in der Farbe eines Naturproduktes wie Schiefer oder dergleichen. Die ästhetische Anmutung des Produktes kann weiter verbessert werden, wenn die Deckschicht durch geeignete Ausgestaltung des Presswerkzeugs mit einer Oberflächenstruktur 8 versehen wird, die einer entsprechenden Struktur eines Naturproduktes nahekommt. Desweiteren kann eine Dekorschicht oder Versiegelung zusätzlich aufgebracht werden.

Offenbart sind ein Paneel und ein Verfahren zur Herstellung eines Paneels, bei dem eine Deckschicht aus einem auf Harnstoff basierendem Material besteht.

### Bezugszeichenliste:

- 1: Paneel
- 2: Kern
- 4: Unterzugsschicht (Underlay)
- 6: Deckschicht (Overlay)
- 8: Oberflächenstruktur

## Patentansprüche

1. Paneel für einen Wand-, Decken- oder Bodenbelag, mit einem Kern (2), der mit einer Deck- oder Dekorschicht (6) versehen ist, **dadurch gekennzeichnet, dass** die Deckschicht (6) einen Anteil an auf Harnstoff basierenden Material enthält.

2. Paneel nach Patentanspruch 1, wobei der Kern aus HDF/MDF besteht.

3. Paneel nach Patentanspruch 1 oder 2, wobei die Deckschicht (6) überwiegend aus eingefärbter Harnstoff-Formaldehyd-Formmasse (UREA) besteht.

4. Paneel nach einem der vorhergehenden Patentansprüche, wobei die Deckschicht die Abriebfestigkeit verbessernde Materialien enthält.

5. Paneel nach einem der vorhergehenden Patentansprüche, wobei die Deckschicht (6) die Schrumpfung vermindernde oder die Fließfähigkeit verbessernde Materialien enthält.

6. Paneel nach einem der vorhergehenden Patentansprüche, wobei die Deckschicht (6) einen Anteil an auf Melamin basierendem Material enthält.

7. Panell nach einem der vorhergehenden Patentansprüche, wobei die Deckschicht (6) Nanopartikel enthält.

8. Paneel nach einem der vorhergehenden Patentansprüche, wobei die Deckschicht (6) geprägt ist.

9. Panell nach einem der vorhergehenden Patentansprüche, mit einer Unterzugsschicht (4).

10. Paneel nach Patentanspruch 9, wobei die Unterzugsschicht (4) aus dem gleichen Material wie die Deckschicht besteht.

11. Paneel nach einem der vorhergehenden Patentansprüche, wobei dieses durchgängig aus dem auf Harnstoff basierendem Material ausgebildet ist.

12. Verfahren zur Herstellung eines Paneels mit den Schritten:
Herstellen einer auf Harnstoff basierenden Pressmasse,
Aufbringen der Pressmasse auf einer Grundschicht (2) und
Verpressen des Schichtaufbaus einer Pressform bei erhöhtem Druck und erhöhter Temperatur.

13. Verfahren nach Patentanspruch 11, wobei die Pressmasse durch Streichen, Walzen, Sprühen oder über eine Düse aufgebracht ist.

14. Verfahren nach Patentanspruch 12 oder 13, wobei eine Unterzugsschicht (4) aus dem gleichen Material wie die Pressmasse aufgebracht wird.
